# EUROPEAN PATENT SPECIFICATION

(11) **EP 3 705 348 B1**
(45) Date of publication and mention of the grant of the patent: **19.05.2021**
(21) Application number: 19160478.4
(22) Date of filing: 04.03.2019
(51) Int. Cl.: B60N 2/90

(54) **MASSAGE CELL STACK FOR A VEHICLE SEAT**
MASSAGEZELLENSTAPEL FÜR EINEN FAHRZEUGSITZ
PILE DE CELLULES DE MASSAGE POUR UN SIÈGE DE VÉHICULE

(43) Date of publication of application: 09.09.2020
(73) Proprietor: KA Group AG, 8004 Zurich (CH)
(72) Inventor: Josefson, Daniel, 56533 Mullsjö (SE); Fry, Jacob, Rugeley, Staffordshire WS15 4TT (GB)
(74) Representative: Uexküll & Stolberg

(56) References cited:
- DE-A1-102005 032 549
- JP-A- 2017 128 144
- US-A1- 2010 244 504
- US-A1- 2013 187 419

## Description

The present invention relates to a massage cell stack for a vehicle seat, comprising a sequence of at least two inflatable air cells, wherein for each pair of subsequent air cells of the sequence the two cells of the pair are connected by a flexible connecting portion including a flow channel providing fluid communication between the two cells, the connecting portion being folded over and the two cells being arranged on top of each other to form a vertical stack of air cells from a lowermost to an uppermost air cell, and a port in fluid communication with one of the cells of the massage cell stack for inflating and deflating it.

Drivers and passengers of motor vehicles especially when driving long distances, often experience discomforts caused by long time static posture when seated in a vehicle seat. This is not only felt as being uncomfortable and causing for example back pain but may also lead to permanent impairment of health, in particular for professional drivers such as taxi, truck and bus drivers. To provide a remedy the automotive industry since some time offers vehicle seats with adjustable lumbar air supports and bolsters and with integrated massage systems in the seat back. The lumbar supports and bolsters in the seat are adjusted by inflating air cells by inflating them with pressurized air and closing them in a desired inflated state. In massage systems series of air cells are sequentially inflated and deflated periodically to provide a massage effect.

In order to achieve a noticeable expansion (rise of the seat cover) in a localized manner massage cell designs have been developed with which utilize two or more air cells on top of each other such that the vertical expansions of the individual air cells add up to a total vertical expansion. Such air cell arrangements on top of each other are also referred to as air cell stacks. One type of such multiple air cell arrangement is a bellows-type air cell arrangement which may for example comprise three bellows or concertina sections on top of each other. Typically the air cell bellows comprises several layers of plastic film, for example polyurethane film. The two layers of a first pair are sealed together along their outer edges. The upper film of this first pair has a central opening. A second pair of film layers forms the second concertina section of the bellows. Again this second pair film layers is sealed to together along their outer edges, and the lower film layer of the second pair likewise has a central opening which is aligned to the central opening of the first pair of film layers. The first pair of film layers is sealed to the second pair of film layers around the adjoining central openings so that the interior of the first concertina section communicates with the interior of the second concertina section through the central openings.

In case a third concertina section follows on top of the second concertina section the upper film layer of the second concertina section also has a central opening which is aligned to a central opening of the lower film layer of the third concertina section which are sealed together around the central openings to thereby establish fluid communication between the first and second concertina sections and the third concertina section. A conduit is connected to one of the concertina sections, for example to the first concertina section for supplying gas for inflation of the air cell bellows or to discharge gas for deflating it.

Whereas such air cell bellows do provide a significant vertical expansion while only a comparatively small lateral area is covered by the air cell bellows, the manufacturing of such air cell bellows is complicated due to the large number of sealing steps required as described above.

The present invention relates to another type of air cell stack which is simpler to manufacture because it requires less welding steps. This kind of air cell stack comprises a sequence of at least two inflatable air cells, wherein for each pair of subsequent air cells of the sequence the two cells of the pair are connected by a flexible connecting portion including a flow channel establishing fluid communication between the two cells. The two air cells of the pair are folded over along the connecting portion to thereby place the two air cells on top of each other air cell stacks of this kind are for example described in DE 10 2005 032 549 A1, EP 1 559 611 A2 and DE 20 2015 104 103 U1. The air cell arrangements described in these documents comprise two subsequent air cells which, when deflated and lying flat have a congruent shape. The two subsequent air cells are connected by one or more connecting portions extending between the two adjacent air cells and including a flow channel for establishing fluid communication between the two air cells. One of the two air cells is folded along the connecting portion to be placed on top of the other. In principle a third air cell could be connected by a connecting portion to the second air cell and be folded over to be placed on top of the second one. The preamble of claim 1 is placed on this type of air cell stack.

One disadvantage of the above described air cells stacks is that they do not exhibit a uniform vertical expansion, but rather an expansion which is referred to as butterfly style expansion. Butterfly expansion refers to the phenomenon that the pair of air cells which were initially in the deflated state symmetrically disposed on top of each other partially unfold when being deflated. This means that in a certain circumferential region the vertical expansion is more pronounced than in the remaining circumference region of the cell stack. Typically, the vertical expansion is more pronounced in the circumferential region opposite to the connecting portion of the two air cells.

Massage cell stacks of the above-described folded configuration having the butterfly expansion characteristic are traditionally only used on the B surface since they do not provide focussed and well localized pressure application to the driver.

It is an object of the present invention to improve an air cell stack of the above-described folded configuration such that it is better suited for massage applications by showing a more uniform vertical expansion. Furthermore, the air cell stack should be improved by reducing the tendency that two air cells placed vertically on top of each other slide in a horizontal direction relative to each other which would also negatively affect the vertical expansion behaviour.

This object is achieved by a massage cell stack comprising the features of claim 1. Preferred embodiments of the invention are set out in the dependent claims.

A massage cell stack for a vehicle seat comprises a sequence of at least two inflatable air cells, wherein for each pair of subsequent air cells of the sequence the two air cells of the pair are connected by flexible connecting portion including a flow channel establishing fluid communication between two air cells. The connecting portion is folded over, whereby the two cells adjoining the connecting portion are placed on top of each other to form a vertical stack of air cells from a lower most to an upper most air cell. It should be noted that the direction "vertical" does not define any particular direction in space but rather refers to the direction in which the stack extends due to the stacking of subsequent air cells on top of each other. Furthermore, the vertical direction is the direction in which the air cell stack most significantly expands upon inflation. Typically, the air cells have the same shape and dimensions when lying flat in the deflated state so that the stacked air cells completely overlap and do not project significantly in a horizontal direction beyond adjacent air cells. A port is provided which is in fluid communication with one of the air cells allowing to supply pressurized air to the air cell stack for inflating it, and to vent off air from the air cell stack for deflating it.

According to the present invention at least one restraining strap is provided which extends between and is connected to vertically aligned circumferential regions of the at least two air cells of the vertical cell stack. At least one restraining strap is connected to the lowermost air cell, and at least one restraining strap is connected to uppermost air cell. At least one restraining strap is arranged and has a length such that it limits vertical expansion of the massage cell stack when being inflated. In other words, at least one restraining strap is tautened so that it prevents further vertical expansion of the air cell stack in a circumferential region which would, with the restraining strap, expand the most. Limiting vertical expansion of the air cell stack implies that the region of the air cell stack having the highest vertical expansion potential is restrained so that its vertical expansion potential is not realized but restricted by at least one pulled tight restraining strap. This means that highest vertical expansion of a region of the air cell stack that would take place in the absence of restraining straps is not realized and thus the vertical expansion of the air cell stack is limited or reduced compared to the situation without restraining straps.

Limiting the vertical expansion of the massage cell stack implies that at least in the circumferential region in which the air cell stack would, in the absence of the restraining strap(s), the highest vertical expansion would have occurred this highest expansion is limited and thus prevented from reaching the highest expansion. This means that the differences in expansion height around the circumference of the cell stack are reduced, and the vertical expansion is thus more uniform around the circumference of the cell stack. Accordingly, the disadvantages of the butterfly expansion behaviour are largely reduced.

Thus, the effect of the restraining straps is to achieve, in combination with the effect of the connecting portions between adjacent air cells, a more uniform vertical expansion around the circumference of the cell stack. A further effect of the restraining straps is, in cooperation with the connecting portions between adjacent air cells, to prevent significant lateral or horizontal movement of the air cells in the vertical cell stack with respect to each other. Therefore, any significant lateral or horizontal shifts of the air cells with respect to each other in the vertical air cell stack are prevented.

The length dimensions of the restraining straps and their arrangement around the circumference of the cell stack control vertical inflation of the air cell stack to a mainly vertical stroke relative to the air cell stack base, while retaining the inflated air cells in a vertically aligned state, i.e. preventing air cells from being displaced in a horizontal direction with respect to each other.

In a preferred embodiment the at least restraining strap is arranged and dimensioned such that it limits the vertical expansion of the air cell stack to the vertical expansion of a circumferential region of the cell stack which has the lowest vertical expansion upon inflation. In this case the vertical expansion is made uniform around the circumference of the cell stack since no vertical expansion beyond the vertical expansion of the circumferential region of the cell stack having the lowest vertical expansion takes place.

In a preferred embodiment a plurality of restraining straps is provided which are connected to peripheral regions of the cell stack which are circumferentially distributed around the vertical cell stack and which have length dimensions such that vertical expansion upon inflation is uniform around the circumference of the vertical cell stack. In other words, no noticeable deviations in the vertical expansion occur around the circumference of the cell stack.

In a preferred embodiment two restraining straps are provided for a pair of adjacent air cells, which two restraining straps are located circumferentially offset with respect to the connecting portion of the two adjacent air cells and diametrically opposite to each other.

In a preferred embodiment the vertical cell stack consists of three air cells on top of each other. At least restraining strap is extending between and connecting vertically aligned circumferential regions of the lower most air cell and of the intermediate air cell. At least one further restraining strap is extending between and connecting vertically aligned circumferential regions of the intermediate air cell and of the upper most air cell. In addition, there may be also one or more restraining straps extending between and connecting vertically aligned circumferential regions the lower most air cell and of the upper most air cell.

Preferably each air cell of the cell stack comprises two congruent plastic foils, for example polyurethane foils, which are welded together around their circumferences, except for the region of the flow channel of the flexible connecting portion extending from the air cell.

Preferably a connecting portion is formed by two stripes of plastic foils extending from the two plastic foils of the air cell and being sealed together along opposite lateral edges to form the flow channel in between.

In this case the stripes of plastic foil forming the connecting portion are preferably provided with spacers extending between the opposite stripes of plastic foil in the region of the flow channel to keep the two plastic foil stripes spaced a part from each other to keep the flow channel open. The spacers may for example be plastic knobs projecting from one of the plastic foil stripes in the region of the flow channel.

In a preferred embodiment the at least one restraining strap is formed by a first plastic tab forming an extension of one of the plastic foils of a first air cell, and by a second plastic tab forming an extension of one of the plastic foils of a second air cell, the taps being circumferentially aligned at the circumference of the vertical cell stack and are vertically extending towards each other, forming an overlap region at their ends remote from the air cell for which they extend, wherein the overlapping ends of the plastic taps are welded together.

The invention will in the following be described in connection with exemplary embodiments illustrated in the drawings in which:
Fig. 1A is a schematic plan view of a connected pair of two subsequent air cells in a lying flat state;
Fig. 1B is a perspective view of the two connected air cells of Fig. 1A folded over in the region of a connecting portion to form an air cell stack;
Fig. 2A is a schematic plan view of a further embodiment of a connected pair of two subsequent air cells in a lying flat state;
Fig. 2B is a perspective view of the two connected air cells of Fig. 2A folded over in the region of a connecting portion to form an air cell stack;
Fig. 3A is a schematic plan view of a further embodiment including three connected subsequent air cells in a lying flat state;
Fig. 3B is a perspective view of the sequence of air cells of Fig. 3A folded over in the area of connecting portions to form a vertical air cell stack of three air cells; and
Fig. 4(A) to (D) are schematic side views of an air cell stack with two subsequent air cells such as in Figs. 2A and 2B, wherein subsequent states during inflation from a deflated state in Fig. 4(A) to a completely inflated state in Fig. 4(D) are shown.

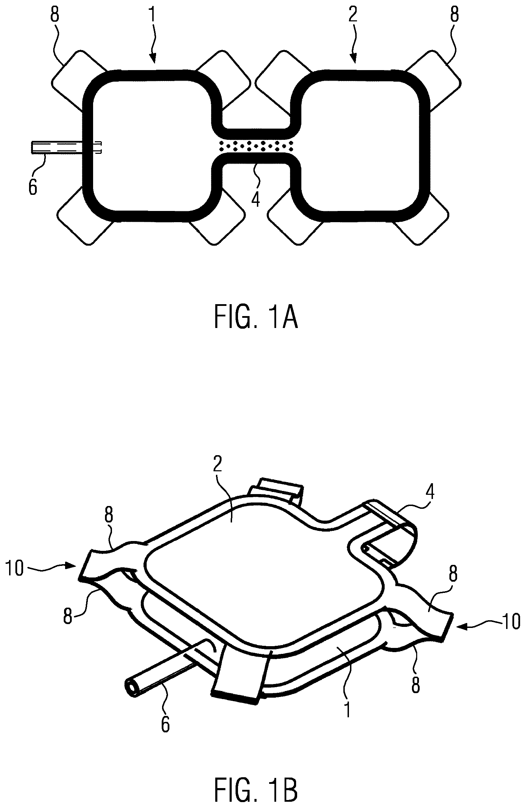

Fig. 1A shows an embodiment of two subsequent connected air cells 1, 2 in a schematic plan view, wherein the two air cells 1, 2 are lying flat adjacent to each other. Each air cell 1, 2 comprises two plastic foils, in this case essentially quadratic plastic foils with rounded corners, which are located on top of each other. Along the circumferential edge the two plastic foils are sealed together, wherein this sealed edge is illustrated as a black edge line in Fig. 1A. The two plastic foils are sealed along the circumferential edges, except for the region of a connecting portion 4 connecting the two air cells. This connecting portion 4 consists of stripes of extension of plastic foil material extending from the two plastic foil pieces of the first air cells to the plastic foil pieces of the second air cell 2, wherein the two plastic strips of the connecting portion 4 are sealed together long their lateral edges to form a flow channel in between. In this flow channels spacers are provided, for example in the form of a distributed pattern of knobs extending from one of the plastic strips and projecting upwards to keep the other plastic strip of the connecting portion 4 spaced apart to thereby keep the flow channel open to allow fluid communication between the two air cells 1, 2.

In order to form a vertical cell stack the two subsequent air cells 1, 2 from Fig. 1A are folded over in the area of the connecting portion 4, thereby placing the second air cell 2 on top of the first air cell 1, as indicated in Fig. 1B.

Each air cell 1, 2 comprises four plastic tabs 8 extending from the corners of each air cell. Once the second air cell 2 has been folded over to place it in on top of the first air cell 1, as shown in Fig. 1B, end regions of the plastic tabs 8 remote from the respective air cells are sealed together in an overlapping region to form a restraining strap 10 by a pair of connected tabs 8.

The first air cell 1 is provided with a port in fluid communication with the interior of the air cell to allow to supply pressurized air to the interior of the connected air cells 1, 2 during inflation, and to vent off air during deflation of the air cell stack.

As will be further explained below the length of the restraining straps 10 and their arrangement around the circumference of the air cell stack 1, 2 in Fig. 1B is chosen such that at least some of them are pulled tight before the air cells 1, 2 reach their full expansion potential along the entire circumference of the air cell stack. In this manner the restraining straps 10 limit the vertical expansion of the air cell stack at least in a certain region around the circumference of the air cell stack, namely in the region that would exhibit the highest vertical growth in the absence of restraining straps. For example, an air cell stack such as shown in Fig. 1B, but without restraining straps 10, would have the tendency to exhibit a higher amount of vertical expansion in a circumferential region of the air cell stack opposite to the connecting portion 4 than in the circumferential region adjacent to the connecting portion 4. Since the vertical expansion of the air cell stack is limited by at least some of the restraining straps 10 the higher vertical expansion in the circumferential region opposite to the connecting portion 4 is limited and thereby reduced compared to an air cell stack without restraining straps 10. In this manner a more uniform vertical expansion of the air cell stack is achieved. Furthermore, the restraining straps 10 also prevent that the air cells 1, 2 could slide in a lateral (horizontal) direction to any significant extent with respect to each other so that the vertical alignment of the air cells 1, 2 is maintained.

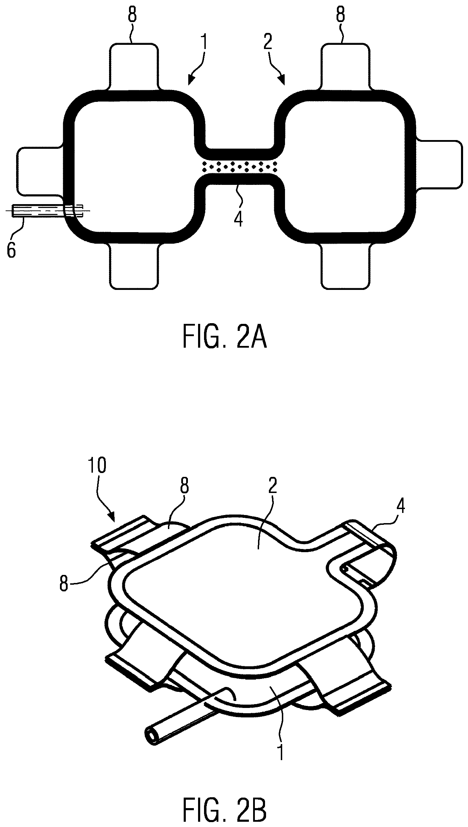

Figs. 2A and 2B show a second embodiment in views corresponding to Figs. 1A and 1B. The embodiment of Figs. 2A and 2B differs from the embodiment of Figs. 1A and 1B by the location of the plastic tabs 8 extending from the air cells 1, 2. In Figs. 2A, 2B the plastic tabs 8 extend from the centres of three lateral edges of each air cells, except for the lateral edge of the lateral edge from which the connecting portion 4 is extending from the air cell.

As can be seen in Fig. 2B the remote ends of the plastic tabs 8 are welded together in an overlapping area to form connecting straps 10 between the subsequent air cells 1, 2.

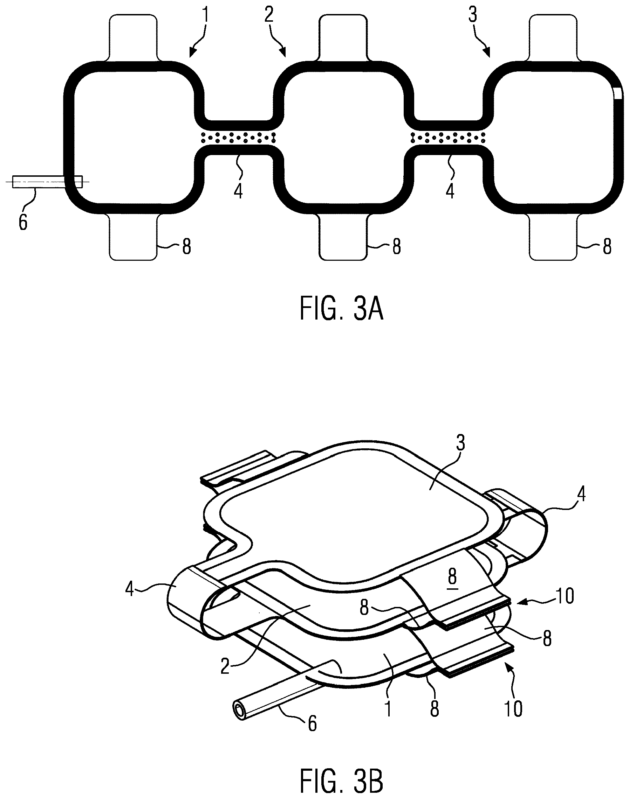

Figs. 3A and 3B show corresponding views as Figs. 2A and 2B of a further embodiment that differs from the embodiment of Figs. 2A and 2B by having a sequence of three subsequent air cells 1, 2, 3, wherein each pair of subsequent air cell, pair 1, 2 and pair 2, 3 is connected by a connecting portion 4. In this embodiment each air cell is provided with plastic tabs 8 disposed on two opposite lateral edges. The second air cell 2 is in fact provided with two tabs 8 on top of each other on each lateral edge.

The air cell stack of Fig. 3B is formed by folding over the second air cell 2 to place it on top of the first air cell 1, and by further folding the third air cell 3 to place it on top of the second air cell 2. Then overlapping remote end regions of the taps 8 are welded together to form restraining straps 10. Again, the dimensions and the arrangement of the restraining straps 10 is chosen such that at least some of the restraining straps 10 limit the vertical expansion of the air cell stack 1, 2, 3 at least in a certain circumferential region thereof, whereby the degree of expansion is made more uniform since the region which would, in the absence of restraining straps, expand the most in vertical direction is prevented from reaching its full vertical expansion potential which provides for less differences of vertical expansion around the circumference of the vertical air cell stack.

In the embodiment of Fig. 3B restraining straps 10 are formed between each of the adjacent pairs 1, 2 and 2, 3 of the air cells of the stack. However, this is not a necessary requirement because restraining straps can also be formed between air cells that are not directly adjacent in the air cell stack, for example between the first air cell 1 and the third air cell 3 in Fig. 3B.

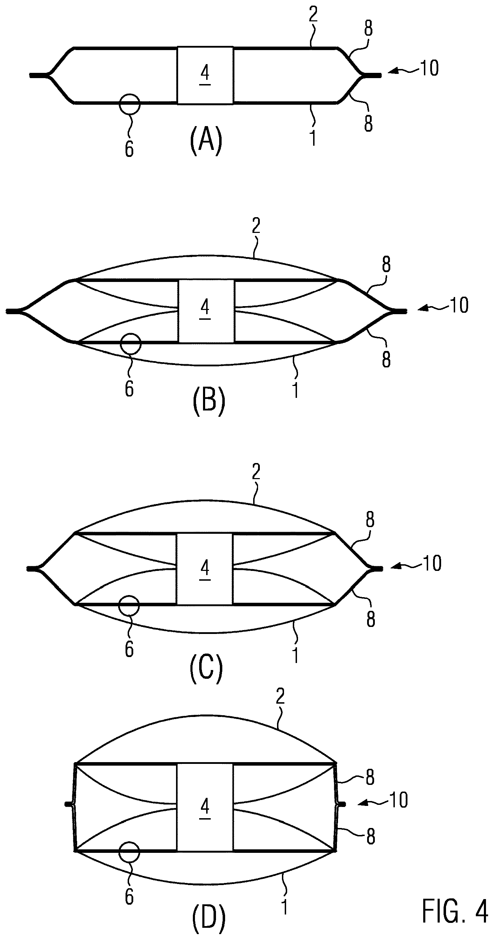

In Figs. 4 (A) to (D) subsequent states during inflation of an air cell stack of two air cells 1, 2 as shown in Fig. 2A and 2B are illustrated. In the deflated state in Fig. 4 (A) the two air cells 1, 2 lying on top of each other have a relatively small vertical extension. The restraining straps 10 on opposite sides are relaxed and extend away from the air cell stack.

In Fig. 4 (B) inflation has started, and the air cells 1, 2 are beginning to expand in vertical direction. This inflation and vertical expansion continues in Fig. 4 (C). In the course of inflation and vertical expansion the connecting portion 4 and the restraining straps 10 grow in vertical extension by being drawn closer to the vertical axis of the vertical air cell stack. Eventually, the restraining straps 10 are pulled tight in the state of Fig. 4 (D) so that the restraining straps 10 restrict further vertical extension, thereby limiting the vertical expansion of the air cell stack. By limiting the vertical expansion of the air cell stack the vertical growth is limited at least in the circumferential region which would, in the absence of restraining straps, grow strongest in vertical direction. In this manner a more uniform vertical expansion of the air cell stack around its circumference is achieved by restraining regions which in principle could grow the most in vertical direction.

The restraining straps 10 are also securing horizontal alignment of the air cell stack.

## Claims

1. Massage cell stack for a vehicle seat, comprising a sequence of at least two inflatable air cells (1, 2, 3), wherein for each pair of subsequent air cells of the sequence the two cells of the pair are connected by a flexible connecting portion (4) including a flow channel providing fluid communication between the two cells, the connecting portion (4) being folded over and the two cells being arranged on top of each other to form a vertical stack of air cells from a lowermost to an uppermost air cell, and a port (6) in fluid communication with one of the cells of the massage cell stack for inflating and deflating it, **characterized in that** at least one restraining strap (10) extends between and is connected to vertically aligned circumferential regions of at least two air cells of the vertical cell stack, **in that** at least one restraining strap is connected to the lowermost air cell (1) and at least one restraining strap (10) is connected to the uppermost air cell (3), and **in that** the at least one restraining strap (10) is arranged and has a length such that it limits vertical expansion of the massage cell stack when being inflated.

2. Massage cell stack according to claim 1, **characterized in that** the at least one restraining strap (10) is arranged and dimensioned such that it limits vertical expansion of the air cell stack to the vertical expansion of a circumferential region which has the lowest vertical expansion upon inflation of the cell stack.

3. Massage cell stack according to claim 1 or 2, **characterized in that** a plurality of restraining straps (10) is provided which are connected to peripheral regions which are circumferentially distributed around the circumference of the vertical cell stack and which have length dimensions such that vertical expansion upon inflation is uniform around the circumference of the vertical cell stack.

4. Massage cell stack according to claim 3, **characterized in that** for a pair of air cells (1, 2) placed on top of each other two restraining straps (10) are located circumferentially offset with respect to the connection portion (4) and diametrically opposite to each other.

5. Massage cell stack according to any of the preceding claims, **characterized in that** the vertical cell stack consists of three air cells (1, 2, 3) on top of each other, and **in that** at least one restraining strap (10) is extending between and connecting vertically aligned circumferential regions of the lowermost air cell (1) and of the intermediate air cell (2) and at least one restraining strap (10) is extending between and connecting vertically aligned circumferential regions of the intermediate air cell (2) and of the uppermost air cell (3).

6. Massage cell stack according to any of the preceding claims, **characterized in that** the vertical cell stack consists of three air cells (1, 2, 3) on top of each other, and **in that** at least one restraining strap is extending between and connecting vertically aligned circumferential regions of the lowermost air cell and of the uppermost air cell.

7. Massage cell stack according to any of the preceding claims, **characterized in that** each air cell (1, 2, 3) comprises two congruent plastic foils which are welded together around their circumferences, except for the region of the flow channel of the flexible connecting portion (4) .

8. Massage cell stack according to claim 6, **characterized in that** a connecting portion (4) is formed by two stripes of plastic foils extending from the two plastic foils of an air cell and being sealed together along opposite lateral edges to form the flow channel in between.

9. Massage cell stack according to claim 8, **characterized in that** the stripes of plastic foil forming the connecting portion are provided with spacers extending between the opposite stripes of plastic foil in the region of the flow channel to keep the two plastic foil stripes spaced apart from each other to keep the flow channel open.

10. Massage cell stack according to any of the claims 6 to 8, **characterized in that** the at least one restraining strap (10) is formed by a first plastic tab (8) forming an extension of one of the plastic foils of a first air cell and by a second plastic tab (8) forming an extension of one of the plastic foils of a second air cell, the tabs (8) being circumferentially aligned at the circumference of the vertical cell stack and forming an overlap region at their ends remote from the air cell from which they extend, wherein they are welded together in the overlap region.

## Patentansprüche

1. Massagezellenstapel für einen Fahrzeugsitz mit einer Reihe von wenigstens zwei aufblasbaren Luftzellen (1, 2, 3), wobei für jedes Paar von aufeinanderfolgenden Luftzellen der Reihe die beiden Zellen des Paars durch einen flexiblen Verbindungsbereich (4) einschließlich eines Strömungskanals verbunden sind, der Fließverbindung zwischen den beiden Zellen herstellt, wobei der Verbindungsbereich (4) umgefaltet ist und die beiden Zellen übereinander angeordnet sind, um einen vertikalen Stapel aus Luftzellen von einer untersten bis zu einer obersten Luftzelle zu bilden, und mit einem Anschluss (6) in Fließverbindung mit einer der Zellen des Massagezellenstapels, um diesen aufzublasen und zu entlüften, **dadurch gekennzeichnet, dass** wenigstens ein Begrenzungsband (10) zwischen in Umfangsrichtung ausgerichteten Regionen von wenigstens zwei Luftzellen des vertikalen Zellenstapels verläuft und mit den Regionen verbunden ist, dass wenigstens ein Begrenzungsband mit der untersten Luftzelle (1) und wenigstens ein Begrenzungsband (10) mit der obersten Luftzelle (3) verbunden ist und dass das wenigstens eine Begrenzungsband (10) so angeordnet ist und eine solche Länge hat, dass es die vertikale Ausdehnung des Massagezellenstapels, wenn dieser aufgeblasen wird, begrenzt.

2. Massagezellenstapel nach Anspruch 1, **dadurch gekennzeichnet, dass** wenigstens ein Begrenzungsband (10) so angeordnet und dimensioniert ist, dass es die vertikale Expansion des Luftzellenstapels auf die vertikale Expansion einer Umfangsregion begrenzt, die die geringste vertikale Expansion nach dem Aufblasen des Zellenstapels hat.

3. Massagezellenstapel nach Anspruch 1 oder 2, **dadurch gekennzeichnet, dass** eine Mehrzahl von Begrenzungsbändern (10) vorhanden ist, die mit Umfangsregionen verbunden sind, die in Umfangsrichtung um den Umfang des vertikalen Zellenstapels verteilt sind, und die Längendimensionen haben, so dass die durch das Aufblasen resultierende vertikale Expansion um den Umfang des vertikalen Zellenstapels gleichmäßig ist.

4. Massagezellenstapel nach Anspruch 3, **dadurch gekennzeichnet, dass** für ein Paar von übereinander platzierten Luftzellen (1, 2) sich zwei Begrenzungsbänder (10) in Umfangsrichtung versetzt in Bezug auf den Verbindungsbereich (4) und einander diametral gegenüberliegend befinden.

5. Massagezellenstapel nach einem der vorhergehenden Ansprüche, **dadurch gekennzeichnet, dass** der vertikale Zellenstapel aus drei übereinander liegenden Luftzellen (1, 2, 3) besteht und dass wenigstens ein Begrenzungsband (10) zwischen vertikal ausgerichteten Umfangsregionen der untersten Luftzelle (1) und der mittleren Luftzelle (2) verläuft und diese verbindet und wenigstens ein Begrenzungsband (10) zwischen vertikal ausgerichteten Umfangsregionen der mittleren Luftzelle (2) und der obersten Luftzelle (3) verläuft und diese verbindet.

6. Massagezellenstapel nach einem der vorhergehenden Ansprüche, **dadurch gekennzeichnet, dass** der vertikale Zellenstapel aus drei übereinander liegenden Luftzellen (1, 2, 3) besteht und dass wenigstens ein Begrenzungsband zwischen vertikal ausgerichteten Umfangsregionen der untersten Luftzelle und der obersten Luftzelle verläuft und diese verbindet.

7. Massagezellenstapel nach einem der vorhergehenden Ansprüche, **dadurch gekennzeichnet, dass** jede Luftzelle (1, 2, 3) zwei deckungsgleiche Kunststofffolien aufweist, die um ihren Umfang, mit Ausnahme der Region des Durchflusskanals des flexiblen Verbindungsbereichs (4), miteinander verschweißt sind.

8. Massagezellenstapel nach Anspruch 6, **dadurch gekennzeichnet, dass** ein Verbindungsbereich (4) durch zwei Streifen aus Kunststofffolie gebildet ist, die von den beiden Kunststofffolien einer Luftzelle ausgehen und miteinander entlang gegenüberliegender Seitenränder verschweißt sind, um dazwischen den Durchflusskanal zu bilden.

9. Massagezellenstapel nach Anspruch 8, **dadurch gekennzeichnet, dass** die Streifen aus Kunststofffolie, die den Verbindungsbereich bilden, mit Abstandshaltern versehen sind, die zwischen den gegenüberliegenden Streifen aus Kunststofffolie in der Region des Durchflusskanals ausgedehnt sind, um die beiden Kunststofffolienstreifen auf Abstand zueinander zu halten, um den Durchflusskanal offen zu halten.

10. Massagezellenstapel nach einem der vorhergehenden Ansprüche 6 bis 8, **dadurch gekennzeichnet, dass** wenigstens ein Begrenzungsband (10) durch einen ersten Kunststoffstreifen (8), der einen Fortsatz einer beiden Kunststofffolien einer ersten Luftzelle bildet, und durch einen zweiten Kunststoffstreifen (8) gebildet ist, der einen Fortsatz von einer der Kunststofffolien einer zweiten Luftzelle bildet, wobei die Streifen (8) in Umfangsrichtung am Umfang des vertikalen Zellenstapels ausgerichtet sind und mit ihren Enden, die von der Luftzelle, von der sie ausgehen, entfernt sind, eine Überlappungsregion bilden, wobei sie in der Überlappungsregion miteinander verschweißt sind.

## Revendications

1. Pile de cellules de massage pour un siège de véhicule, comprenant une séquence d'au moins deux cellules d'air gonflables (1, 2, 3), dans laquelle pour chaque paire de cellules d'air consécutives de la séquence, les deux cellules de la paire sont reliées par une partie de connexion flexible (4) incluant un canal d'écoulement fournissant une communication fluidique entre les deux cellules, la partie de connexion (4) étant repliée et les deux cellules étant agencées l'une au-dessus de l'autre pour former une pile verticale de cellules d'air d'une cellule d'air la plus basse à une cellule d'air la plus haute, et un orifice (6) en communication fluidique avec l'une des cellules de la pile de cellules de massage pour la gonfler et la dégonfler, **caractérisée en ce qu'**au moins une sangle de retenue (10) s'étend entre et est reliée à des régions circonférentielles alignées verticalement d'au moins deux cellules d'air de la pile de cellules verticale, **en ce qu'**au moins une sangle de retenue est connectée à la cellule d'air la plus basse (1) et au moins une sangle de retenue (10) est connectée à la cellule d'air la plus haute (3), et **en ce que** la au moins une sangle de retenue (10) est agencée et présente une longueur telle qu'elle limite une expansion verticale de la pile de cellules de massage lorsqu'elle est gonflée.

2. Pile de cellules de massage selon la revendication 1, **caractérisée en ce que** la au moins une sangle de retenue (10) est agencée et dimensionnée de telle sorte qu'elle limite une expansion verticale de la pile de cellules d'air à l'expansion verticale d'une région circonférentielle qui présente l'expansion verticale la plus basse lors d'un gonflage de la pile de cellules.

3. Pile de cellules de massage selon la revendication 1 ou 2, **caractérisée en ce qu'**une pluralité de sangles de retenue (10) est prévue, qui sont reliées à des régions périphériques qui sont réparties circonférentiellement autour de la circonférence de la pile de cellules verticales et qui présentent des dimensions de longueur telles qu'une expansion verticale lors d'un gonflage est uniforme autour de la circonférence de la pile de cellules verticale.

4. Pile de cellules de massage selon la revendication 3, **caractérisée en ce que** pour une paire de cellules d'air (1, 2) placées l'une sur l'autre, deux sangles de retenue (10) sont positionnées circonférentiellement décalées par rapport à la partie de connexion (4) et diamétralement opposées l'une à l'autre.

5. Pile de cellules de massage selon l'une quelconque des revendications précédentes, **caractérisée en ce que** la pile de cellules verticale consiste en trois cellules d'air (1, 2, 3) les unes sur les autres, et **en ce qu'**au moins une sangle de retenue (10) s'étend entre et relie des régions circonférentielles alignées verticalement de la cellule d'air la plus basse (1) et de la cellule d'air intermédiaire (2) et au moins une sangle de retenue (10) s'étend entre et relie des régions circonférentielles alignées verticalement de la cellule d'air intermédiaire (2) et de la cellule d'air la plus haute (3).

6. Pile de cellules de massage selon l'une quelconque des revendications précédentes, **caractérisée en ce que** la pile de cellules verticale consiste en trois cellules d'air (1, 2, 3) les unes sur les autres, et **en ce qu'**au moins une sangle de retenue s'étend entre et relie des régions circonférentielles alignées verticalement de la cellule d'air la plus basse et de la cellule d'air la plus haute.

7. Pile de cellules de massage selon l'une quelconque des revendications précédentes, **caractérisée en ce que** chaque cellule d'air (1, 2, 3) comprend deux feuilles de plastique conformes qui sont soudées ensemble autour de leurs circonférences, à l'exception de la région du canal d'écoulement de la partie de connexion flexible (4).

8. Pile de cellules de massage selon la revendication 6, **caractérisée en ce qu'**une partie de connexion (4) est formée par deux bandes de feuilles de plastique s'étendant à partir des deux feuilles de plastique d'une cellule d'air et étant scellées ensemble le long de bords latéraux opposés pour former le canal d'écoulement entre les deux.

9. Pile de cellules de massage selon la revendication 8, **caractérisée en ce que** les bandes de feuille plastique formant la partie de connexion sont pourvues d'éléments d'espacement s'étendant entre les bandes opposées de feuille de plastique dans la région du canal d'écoulement pour maintenir les deux bandes de feuille plastique espacées l'une de l'autre afin de maintenir le canal d'écoulement ouvert.

10. Pile de cellules de massage selon l'une quelconque des revendications 6 à 8, **caractérisée en ce que** la au moins une sangle de retenue (10) est formée par une première languette de plastique (8) formant un prolongement de l'une des feuilles de plastique d'une première cellule d'air et par une seconde languette de plastique (8) formant une extension de l'une des feuilles de plastique d'une seconde cellule d'air, les languettes (8) étant alignées circonférentiellement au niveau de la circonférence de la pile de cellules verticale et formant une région de chevauchement au niveau de leurs extrémités éloignées de la cellule d'air à partir de laquelle elle s'étendent, dans laquelle elles sont soudées ensemble dans la région de chevauchement.
